# EUROPEAN PATENT SPECIFICATION

(11) **EP 3 091 781 B1**
(45) Date of publication and mention of the grant of the patent: **06.05.2020**
(21) Application number: 14876187.7
(22) Date of filing: 09.07.2014
(51) Int. Cl.: H04W 24/10

(54) **MEASUREMENT CONFIGURATION METHOD AND DEVICE AND BASE STATION**
MESSKONFIGURATIONSVERFAHREN UND VORRICHTUNG SOWIE BASISSTATION
PROCÉDÉ ET DISPOSITIF DE CONFIGURATION DE MESURES ET STATION DE BASE

(30) Priority: 30.12.2013 CN 201310746480
(43) Date of publication of application: 09.11.2016
(73) Proprietor: ZTE Corporation, Shenzhen City, Guangdong Province 518057 (CN)
(72) Inventor: LIU, Wei, Shenzhen Guangdong 518057 (CN); JING, Xiaoxi, Shenzhen Guangdong 518057 (CN)
(74) Representative: Brunazzi, Stefano
(86) International application number: PCT/CN2014/081914
(87) International publication number: WO 2015/101004

(56) References cited:
- WO-A1-2013/120447
- WO-A2-2014/048935
- CN-A- 101 188 554
- CN-A- 101 465 808
- CN-A- 102 056 319
- CN-A- 102 811 489
- US-A1- 2008 137 654
- US-A1- 2011 098 034
- US-A1- 2013 242 787
- NTT DOCOMO ET AL: "Measurement rules, objects and mapping", 3GPP DRAFT; R2-075570 MEASUREMENT CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Vienna, Austria; 20071210, 10 December 2007 (2007-12-10), XP050142109, [retrieved on 2007-12-10]

## Description

### Technical Field

The disclosure relates to the field of communications, and in particular to a measurement configuration method and apparatus, and a base station (eNB).

### Background

An Evolved Universal Terrestrial Radio Access Network (E-UTRAN) makes measurement configurations on a User Equipment (UE) under an RRC_CONNECTED state by Radio Resource Control (RRC) Connection Reconfiguration signalling. The UE reports measurement information according to these measurement configurations. The measurement configurations include a measurement object list, a report configuration list and a measurement Identifier (ID) list. Measurement objects are configured to appoint the UE to execute measurement frequent points. A measurement object ID is configured to identify a measurement object. Report configurations are configured to appoint the UE to measurement reported criterions and formats. A report configuration ID is configured to identify a report configuration. Each measurement ID is configured to associate a measurement object with a report configuration. Thus, by means of different measurement IDs, a measurement object can be associated with different report configurations, or a report configuration can be associated with different measurement objects. When the UE reports a measurement result to the E-UTRAN by Measurement Report signalling, a measurement report contains a measurement ID for triggering measurement reporting, a measurement purpose, a measurement object and a report configuration, which are associated with each other, can be found by the measurement ID, and the E-UTRAN processes the measurement report according to the measurement purpose, the measurement object and the report configuration. A maximum number of measurement objects, a maximum number of report configurations and a maximum number of measurement IDs defined in a conventional protocol are all 32, wherein each measurement ID is a non-reusable resource. However, measurements serving as basic functions at present can be used in other functions such as load balancing and Circuit-Switched (CS) Fallback (CSFB) in addition to mobility related functions. Some of measurement objects and report configurations used by different functions can be reused while some of measurement objects and report configurations cannot be reused, so that when multiple measurements exist simultaneously, the number of needed measurement object IDs, the number of needed report configurations and the number of needed measurement IDs will exceed maximum values, and measurement requirements of the E-UTRAN cannot be well met.

The U.S. Patent Application US 2013/0242787 A1 discloses a system and method for measurement report triggering configuration for multiple point communication measurement set management.

The 3GPP Draft R2-075570 "Measurement rules, objects and mapping" (NTT DoCoMo, Inc.) discusses details of measurement configuration, particularly the relation between measurement rules and objects, in the context of inter-frequency handover.

The International Patent Application WO 2013/120447 A1 describes a communications terminal and a method and apparatus for testing.

The U.S. Patent Application US 2011/098034 A1 discloses a mobile communication method and a radio base station, considering in particular aspects related to measurement rules and objects.

### Summary

The invention is defined in the appended set of claims.
The embodiments of the disclosure provide a measurement configuration method and apparatus, and a base station, so as to at least solve the problem that a conventional configuration mechanism for measurement configurations cannot better meet measurement requirements of various functions.

In one embodiment of the disclosure, a measurement configuration method is provided. In a process of configuring measurement configurations to be configured, the method comprise that:
when it is determined that one or more pre-emptible measurement configuration exist in issued measurement configurations, reclaiming resources of at least one measurement configuration from the pre-emptible measurement configurations so that the reclaimed resources are able to be used for configuring measurement configurations to be configured currently.

Optionally, before the measurement configurations to be configured currently are configured, the method further comprises:
judging whether one or more measurement configuration needing to be closed exist in the issued measurement configurations, and when it is judged that measurement configurations needing to be closed exist in the issued measurement configurations, deleting the measurement configurations needing to be closed and reclaiming ID resources of the deleted measurement configurations.

Optionally, before it is judged whether the pre-emptible measurement configurations exist in the issued measurement configurations, the method further comprises judging whether no resources have remained currently for configuring the measurement configurations to be configured currently.

Optionally, the step that judging whether no resources have remained currently for configuring the measurement configurations to be configured currently comprises:
judging whether the number of issued measurement IDs has reached a maximum value.

Optionally, the method further comprising ording the measurement configurations to be configured currently before resources are allocated to the measurement configurations to be configured currently, wherein ordering the measurement configurations to be configured currently comprises:
ordering the measurement configurations to be configured currently according to a function priority; or,
ordering the measurement configurations to be configured currently according to a function priority, and further ordering measurement objects corresponding to all measurement configurations to be configured according to a system priority and a frequency point priority.

Optionally, the pre-emptible measurement configurations comprise: measurement configurations of which a function priority is lower than that of the measurement configurations to be configured currently, in the issued measurement configurations; or,
measurement configurations, which have pre-emptive identifiers and of which the function priority is lower than that of the measurement configurations to be configured currently in the issued measurement configurations, and the measurement configurations.

Optionally, reclaiming the resources of at least one measurement configuration from the pre-emptible measurement configurations comprises:
selecting at least one measurement configuration of which the function priority, a system priority and a frequency point priority are lowest from the pre-emptible measurement configurations, deleting the at least one measurement configuratio, and reclaiming following IDs of the at least one measurement configuration: a measurement object ID, a report configuration ID and a measurement ID.

In one embodiment of the disclosure, a measurement configuration apparatus is also provided, which comprises a resource pre-emption module, configured to reclaim, when it is determined that one or more pre-emptible measurement configuration exist in issued measurement configurations in a process of configuring measurement configurations to be configured, resources of at least one measurement configuration from the pre-emptible measurement configurations so that the reclaimed resources are able to be used for configuring measurement configurations to be configured currently.

Optionally, the apparatus further comprising a resource reclamation module, configured to delete, before the measurement configurations to be configured currently are configured and it is determined that one or more measurement configuration needing to be closed exist in the issued measurement configurations, the measurement configurations needing to be closed, and reclaim resources of the deleted measurement configurations to be used for issuing during this measurement.

Optionally, the apparatus further comprising a judgement module, configured to judge, before the resource pre-emption module judges whether the pre-emptible measurement configurations exist in the issued measurement configurations, whether no resources have remained currently for configuring the measurement configurations to be configured currently.

Optionally, the pre-emptible measurement configurations comprise: measurement configurations of which a function priority is lower than that of the measurement configurations to be configured currently in the issued measurement configurations;
or
measurement configurations, which have pre-emptive identifiers and of which the function priority is lower than that of the measurement configurations to be configured currently in the issued measurement configurations, and the measurement configurations.

In one embodiment of the disclosure, a base station is also provided, which comprises a memory and a processor, wherein the memory is configured to store at least one program module, and the processor is configured to execute, in a process of configuring measurement configurations to be configured according to at least one program module, the following step:
when it is determined that one or more pre-emptible measurement configuration exist in issued measurement configurations, reclaiming resources of at least one measurement configuration from the pre-emptible measurement configurations so that the reclaimed resources are able to be used for configuring measurement configurations to be configured currently.

Optionally, the processor is further configured to execute, in the process of configuring the measurement configurations to be configured according to at least one program module, the following steps:
before measurement configurations to be configured currently are configured, and when it is determined that one or more measurement configuration needing to be closed exist in the issued measurement configurations, deleting the measurement configurations needing to be closed, and reclaiming resources of the deleted measurement configurations.

The embodiments of the disclosure have the beneficial effects as follows.

According to the measurement configuration method and apparatus and the base station provided by the embodiments of the disclosure, in the process of configuring measurement configurations, to be configured, of a terminal, when it is determined that the one or more pre-emptible measurement configuration exist in the issued measurement configurations, reclaiming the resources of at least one measurement configuration from the pre-emptible measurement configurations so that the reclaimed resources are able to be used for configuring measurement configurations to be configured currently. That is, resources can be dynamically pre-empted as required in the process of configuring measurement configurations, so that limited resources can be used by measurement functions which are most needed by the base station, thereby better meeting measurement requirements of various functions.

In addition, in the embodiments of the disclosure, before the measurement configurations to be configured are configured, it is judged whether the one or more measurement configuration needing to be closed exist in the issued measurement configurations, and if so, deleting the measurement configurations needing to be closed, and reclaiming the resources of the deleted measurement configurations. That is, the resources can be dynamically reclaimed in the process of configuring measurement configurations, so that limited resources can be better recycled and can be more flexibly allocated, and the measurement requirements of various functions can be further met.

### Brief Description of the Drawings

Fig. 1 is a structural diagram of a measurement configuration apparatus according to an embodiment 2 of the disclosure;
Fig. 2 is a structural diagram of a base station according to an embodiment 3 of the disclosure;
Fig. 3 is a flow diagram of a measurement configuration method according to an embodiment 4 of the disclosure;
Fig. 4 is a flow diagram of configuration success for all measurement configurations to be configured according to an embodiment 5 of the disclosure;
Fig. 5 is a flow diagram of configuration success for some measurement configurations to be configured according to an embodiment 6 of the disclosure; and
Fig. 6 is a flow diagram of no remaining resources to be configured according to an embodiment 7 of the disclosure.

### Detailed Description of the Embodiments

By means of the solution provided by the disclosure, in a process of configuring measurement configurations to be configured, resources can be dynamically reclaimed or can be dynamically pre-empted as required, so that limited resources can be better recycled and can be more flexibly allocated, and the measurement requirements of various functions can be better met. The disclosure is further described below with reference to the detailed description of the embodiments and the drawings in detail.

### Embodiment 1

In a process of configuring measurement configurations, to be configured, of a terminal, a measurement configuration method provided by the embodiment includes that:
it is judged whether pre-emptible measurement configurations exist in issued measurement configurations, and if so, resources of at least one measurement configuration are reclaimed from the pre-emptible measurement configurations so that the reclaimed resources are able to be used for configuring measurement configurations to be configured currently.

It should be understood that: in theory, the judgement whether the pre-emptible measurement configurations exist may be executed at any time before the measurement configurations to be configured are configured, and may also be executed unconditionally. That is, the judgement will be executed as long as a measurement configuration needs to be configured. Certainly, the step can be set to be executed conditionally, thereby avoiding execution of the judgement step when current resources are sufficient. Thus, the embodiment can set that when it is judged whether no resources have remained currently for configuring the measurement configurations to be configured, it is judged whether the pre-emptible measurement configurations exist.

In the embodiment, reclamation of resources of a measurement configuration includes deletion of the measurement configuration and reclamation of ID resources of the measurement configuration, the ID resources including a measurement object ID, a report configuration ID and a measurement ID. The reclaimed measurement object ID, the reclaimed report configuration ID and the reclaimed measurement ID may be further marked to be unused.

In the embodiment, when it is judged whether no resources have remained currently for configuring the measurement configurations to be configured, it can be judged whether the number of issued measurement IDs has reached a maximum value (that is, it is judged whether unused measurement IDs exist currently), for example, it is judged whether the number of the issued measurement IDs has been equal to 32, and if so, it is determined that no resources remain.

In the embodiment, the pre-emptible measurement configurations are defined as: measurement configurations of which a function priority is lower than that of the measurement configurations to be configured currently in the issued measurement configurations; or,
measurement configurations of which the function priority is lower than that of the measurement configurations to be configured currently in the issued measurement configurations, the measurement configurations having pre-emptive identifiers. Each pre-emptive identifier is configured to identify that the corresponding measurement configuration may be pre-empted. Thus, some measurement configurations which have low function priority but cannot be deleted currently can be prevented from being pre-empted.

In the embodiment, when it is determined that the pre-emptible measurement configurations exist, the step that the resources of at least one measurement configuration are reclaimed from the pre-emptible measurement configurations may include that: at least one measurement configuration of which the function priority, a system priority and a frequency point priority are lowest is selected from the pre-emptible measurement configurations to be pre-empted, the measurement configuration is deleted, and a measurement object ID, a report configuration ID and a measurement ID of the measurement configuration are reclaimed. Certainly, in theory, at least one measurement configuration can be randomly selected from the pre-emptible measurement configurations to be pre-empted. Here, setting of the measurement configuration of which the function priority, the system priority and the frequency point priority are all lowest to be pre-empted is intended to reduce influence on other measurements after pre-emption as far as possible. Thus, a necessity to these measurement configurations is minimal generally.

The presented process includes a process of dynamically pre-empting resources before the measurement configurations to be configured currently are configured. In the embodiment, before the measurement configurations to be configured are configured, the process may include a process of dynamically reclaiming resources, which specifically include:
before the measurement configurations to be configured currently are configured, judging whether measurement configurations needing to be closed (for example, test configurations which have accomplished measurement or measurement configurations under an invalid state) exist in the issued measurement configurations, and if so, deleting the measurement configurations needing to be closed and reclaiming resources of the deleted measurement configurations. The reclaimed resources include measurement object IDs, report configuration IDs and measurement IDs. The reclaimed measurement object IDs, the reclaimed report configuration IDs and the reclaimed measurement IDs may be further marked to be unused. The reclaimed resources may be configured to configure other measurement configurations to be configured. By dynamically reclaiming the resources, limited resources can be better recycled and can be more flexibly allocated, and the measurement requirements of various functions can be better met.

In the embodiment, before resources are allocated to the measurement configurations to be configured currently, the measurement configurations to be configured currently may be further ordered, and then each measurement configuration is allocated with corresponding ID resources according to a sequence after ordering. The ordering in the embodiment includes:
ordering all measurement configurations to be configured currently according to the function priority;
   or
ordering all measurement configurations to be configured currently according to the function priority, and then ordering measurement objects corresponding to all measurement configurations to be configured according to the system priority and the frequency point priority.

### Embodiment 2

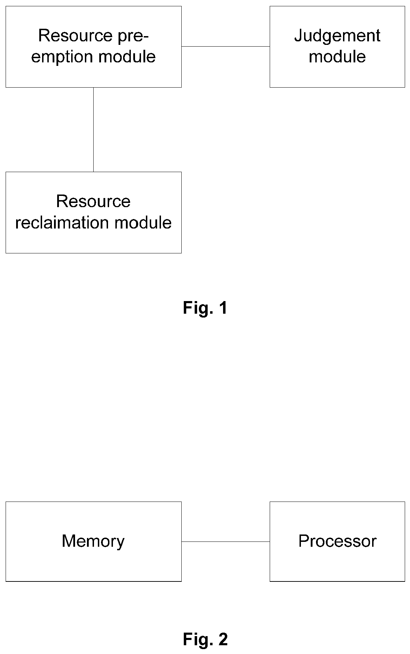

As shown in Fig. 1, a measurement configuration apparatus provided by the embodiment includes a resource pre-emption module, configured to reclaim, when it is determined that pre-emptible measurement configurations exist in issued measurement configurations in a process of configuring measurement configurations to be configured, resources of at least one measurement configuration from the pre-emptible measurement configurations so that the reclaimed resources are able to be used for configuring measurement configurations to be configured currently.

It should be understood that: in theory, the resource pre-emption module may execute the judgement whether the pre-emptible measurement configurations exist at any time before the measurement configurations to be configured are configured, and may also execute the judgement unconditionally. That is, the judgement will be executed as long as a measurement configuration needs to be configured. Certainly, the step can be set to be executed conditionally, thereby avoiding execution of the judgement step when current resources are sufficient. Thus, the apparatus in the embodiment may further include a judgement module, configured to inform, when it is judged whether no resources have remained currently for configuring the measurement configurations to be configured, the resource pre-emption module to judge whether the pre-emptible measurement configurations exist.

In the embodiment, reclamation of resources of a measurement configuration includes deletion of the measurement configuration and reclamation of ID resources of the measurement configuration, the ID resources including a measurement object ID, a report configuration ID and a measurement ID. The reclaimed measurement object ID, the reclaimed report configuration ID and the reclaimed measurement ID may be further marked to be unused.

In the embodiment, when it is judged whether no resources have remained currently for configuring the measurement configurations to be configured, it can be judged whether the number of issued measurement IDs has reached a maximum value (that is, it is judged whether unused measurement IDs exist currently), for example, it is judged whether the number of the issued measurement IDs has been equal to 32, and if so, it is determined that no resources remain.

In the embodiment, the pre-emptible measurement configurations are defined as: measurement configurations of which a function priority is lower than that of the measurement configurations to be configured currently in the issued measurement configurations; or,
measurement configurations of which the function priority is lower than that of the measurement configurations to be configured currently in the issued measurement configurations, the measurement configurations having pre-emptive identifiers. Each pre-emptive identifier is configured to identify that the corresponding measurement configuration may be pre-empted. Thus, some measurement configurations which have low function priority but cannot be deleted currently can be prevented from being pre-empted.

Thus, when it is determined that the pre-emptible measurement configurations exist in the issued measurement configurations, the resource pre-emption module needs to judge whether the measurement configurations of which the function priority is lower than that of the measurement configurations to be configured currently exist in the issued measurement configurations, or the resource pre-emption module also needs to further judge whether the measurement configurations having the pre-emptive identifiers exist in the measurement configurations of which the function priority is lower than that of the measurement configurations to be configured currently in the issued measurement configurations.

In the embodiment, when it is determined that the pre-emptible measurement configurations exist, the operation that the resource pre-emption module reclaims the resources of at least one measurement configuration from the pre-emptible measurement configurations may include that: at least one measurement configuration of which the function priority, a system priority and a frequency point priority are lowest is selected from the pre-emptible measurement configurations to be pre-empted, the measurement configuration is deleted, and a measurement object ID, a report configuration ID and a measurement ID of the measurement configuration are reclaimed. Certainly, in theory, at least one measurement configuration can be randomly selected from the pre-emptible measurement configurations to be pre-empted. Here, setting of the measurement configuration of which the function priority, the system priority and the frequency point priority are all lowest to be pre-empted is intended to reduce influence on other measurements after pre-emption as far as possible. Thus, a necessity to these measurement configurations is minimal generally.

As shown in Fig. 1, the measurement configuration apparatus in the embodiment further includes a resource reclamation module, configured to delete, when it is determined that measurement configurations needing to be closed (for example, test configurations which have accomplished measurement or measurement configurations under an invalid state) exist in the issued measurement configurations before the measurement configuration apparatus configures the measurement configurations to be configured currently, the measurement configurations needing to be closed, and reclaim resources of the deleted measurement configurations. The reclaimed resources include measurement object IDs, report configuration IDs and measurement IDs of the measurement configurations. The reclaimed measurement object IDs, the reclaimed report configuration IDs and the reclaimed measurement IDs can be further marked to be unused. The reclaimed resources can be configured to configure other measurement configurations to be configured. By dynamically reclaiming the resources, limited resources can be better recycled and can be more flexibly allocated, and the measurement requirements of various functions can be better met.

### Embodiment 3

As shown in Fig. 2, the embodiment provides a base station (eNB), which includes a memory and a processor.

The memory is configured to store at least one program module. The processor is configured to execute, in a process of configuring measurement configurations to be configured according to at least one program module, the following step that:
it is judged whether pre-emptible measurement configurations exist in issued measurement configurations, and if so, resources of at least one measurement configuration are reclaimed from the pre-emptible measurement configurations so that the reclaimed resources are able to be used for configuring measurement configurations to be configured currently.

It should be understood that: in theory, the judgement whether the pre-emptible measurement configurations exist may be executed at any time before the measurement configurations to be configured are configured, and may also be executed unconditionally. That is, the judgement will be executed as long as a measurement configuration needs to be configured. Certainly, the step can be set to be executed conditionally, thereby avoiding execution of the judgement step when current resources are sufficient. Thus, the embodiment can set that when it is judged whether no resources have remained currently for configuring the measurement configurations to be configured, it is judged whether the pre-emptible measurement configurations exist.

In the embodiment, reclamation of resources of a measurement configuration includes deletion of the measurement configuration and reclamation of ID resources of the measurement configuration, the ID resources including a measurement object ID, a report configuration ID and a measurement ID. The reclaimed measurement object ID, the reclaimed report configuration ID and the reclaimed measurement ID may be further marked to be unused.

In the embodiment, when it is judged whether no resources have remained currently for configuring the measurement configurations to be configured, it can be judged whether the number of issued measurement IDs has reached a maximum value (that is, it is judged whether unused measurement IDs exist currently), for example, it is judged whether the number of the issued measurement IDs has been equal to 32, and if so, it is determined that no resources remain.

In the embodiment, the pre-emptible measurement configurations are defined as: measurement configurations of which a function priority is lower than that of the measurement configurations to be configured currently in the issued measurement configurations; or,
measurement configurations of which the function priority is lower than that of the measurement configurations to be configured currently in the issued measurement configurations, the measurement configurations having pre-emptive identifiers. Each pre-emptive identifier is configured to identify that the corresponding measurement configuration may be pre-empted. Thus, some measurement configurations which have low function priority but cannot be deleted currently can be prevented from being pre-empted.

In the embodiment, when it is determined that the pre-emptible measurement configurations exist, the step that the resources of at least one measurement configuration are reclaimed from the pre-emptible measurement configurations may include that: at least one measurement configuration of which the function priority, a system priority and a frequency point priority are lowest is selected from the pre-emptible measurement configurations to be pre-empted, the measurement configuration is deleted, and a measurement object ID, a report configuration ID and a measurement ID of the measurement configuration are reclaimed. Certainly, in theory, at least one measurement configuration can be randomly selected from the pre-emptible measurement configurations to be pre-empted. Here, setting of the measurement configuration of which the function priority, the system priority and the frequency point priority are all lowest to be pre-empted is intended to reduce influence on other measurements after pre-emption as far as possible. Thus, a necessity to these measurement configurations is minimal generally.

In the embodiment, the processor is further configured to execute, in the process of configuring measurement configurations to be configured according to at least one program module, the following steps that:
before the measurement configurations to be configured currently are configured, it is judged whether measurement configurations needing to be closed (for example, test configurations which have accomplished measurement or measurement configurations under an invalid state) exist in the issued measurement configurations, and if so, the measurement configurations needing to be closed are deleted and resources of the deleted measurement configurations are reclaimed. The reclaimed resources include measurement object IDs, report configuration IDs and measurement IDs. The reclaimed measurement object IDs, the reclaimed report configuration IDs and the reclaimed measurement IDs may be further marked to be unused. The reclaimed resources may be configured to configure other measurement configurations to be configured. By dynamically reclaiming the resources, limited resources can be better recycled and can be more flexibly allocated, and the measurement requirements of various functions can be better met.

### Embodiment 4

In order to better understand the disclosure, the disclosure is further described below by taking several situations which may be caused in an actual process of configuring measurement configurations, thereby better aiding in understanding the disclosure.

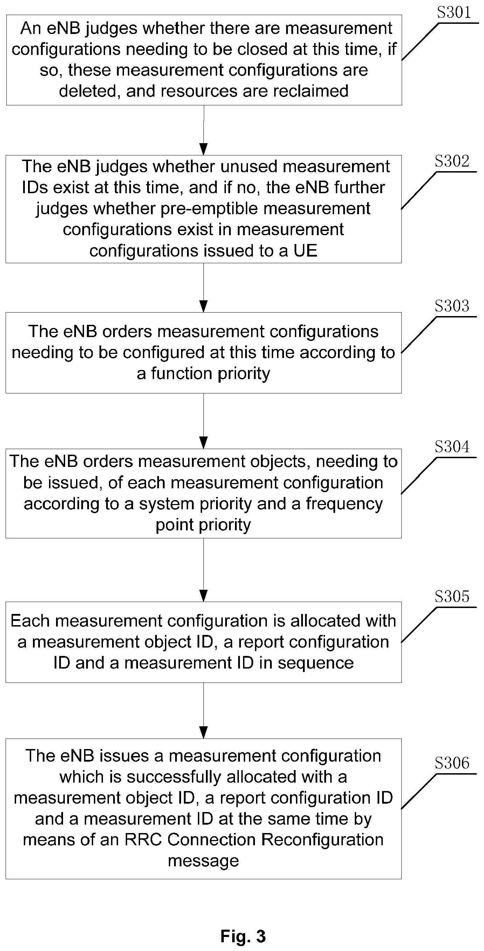

Fig. 3 shows a total flowchart of a process of configuring measurement configurations according to the embodiment. The flow includes the steps as follows.

Step 301: A base station (eNB) judges whether there are measurement configurations needing to be closed at this time (currently), if so, these measurement configurations are added to a deletion list, and corresponding measurement object IDs, report configuration IDs and measurement IDs are reclaimed and are marked to be unused in order to be continuously used when measurement is opened subsequently.

Step 302: The base station judges whether unused measurement IDs exist at this time (currently), that is, the base station judges whether remaining resources exist currently, if no, the base station judges whether pre-emptible measurement configurations exist in measurement configurations issued to a UE, if so, at least one measurement configuration of which a function priority, a system priority and a frequency point priority are lowest is pre-empted from the pre-emptible measurement configurations, the measurement configuration is deleted, and the measurement object ID, the report configuration ID and the measurement ID of the measurement configuration are reclaimed.

Step 303: The base station orders measurement configurations needing to be configured at this time according to the function priority.

Step 304: The base station orders measurement objects, needing to be issued, of each measurement configuration according to the system priority and the frequency point priority.

Step 305: On the basis of the first two ordering operations, the base station allocates each measurement configuration with the measurement object ID, the report configuration ID and the measurement ID in sequence; and if a measurement object or a report configuration therein has been issued to the UE and is being used, a new ID will not be allocated, a previous ID which is dynamically allocated is continuously used, and a new measurement ID will be allocated.

Step 306: The base station issues a measurement configuration which is successfully allocated with a measurement object ID, a report configuration ID and a measurement ID at the same time by means of an RRC Connection Reconfiguration message (or other message mechanisms certainly), and when any one of the three IDs cannot be allocated, the corresponding measurement configuration will not be issued to the UE at this time.

### Embodiment 5

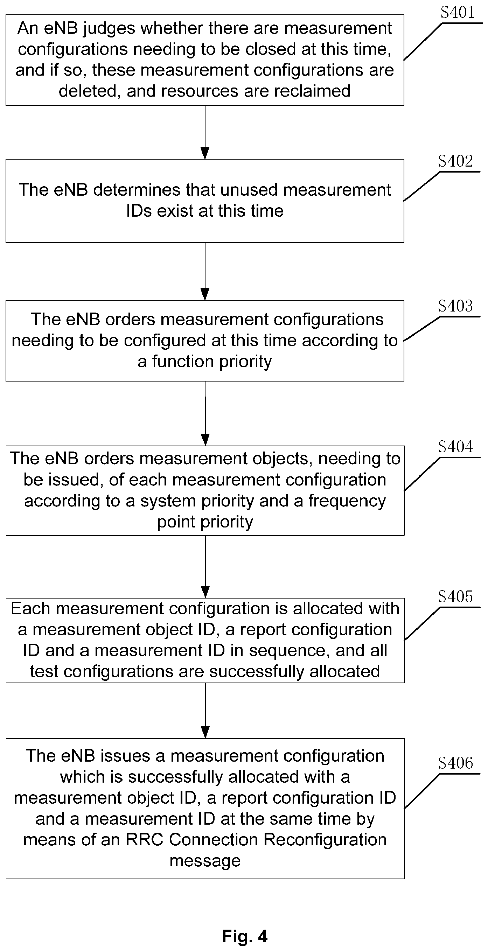

Fig. 4 shows a flow diagram of configuration success for all measurement configurations to be configured. The flow includes the steps as follows.

Step 401: A base station (eNB) judges whether there are measurement configurations needing to be closed at this time (currently), if so, these measurement configurations are added to a deletion list, and corresponding measurement object IDs, report configuration IDs and measurement IDs are reclaimed and are marked to be unused in order to be continuously used when measurement is opened subsequently.

Step 402: The base station judges whether unused measurement IDs exist at this time (currently), that is, the base station judges whether remaining resources exist currently, and if it is determined that the remaining resources exist, Step 403 is executed.

Step 403: The base station orders measurement configurations needing to be configured at this time according to a function priority.

Step 404: The base station orders measurement objects, needing to be issued, of each measurement configuration according to a system priority and a frequency point priority.

Step 405: On the basis of the first two ordering operations, the base station allocates each measurement configuration with the measurement object ID, the report configuration ID and the measurement ID in a sequence of priority from high to low; if a measurement object or a report configuration therein has been issued to a UE and is being used, a new ID will not be allocated, a previous ID which is dynamically allocated is continuously used, and a new measurement ID will be allocated; and it is assumed that all measurement configurations to be configured at this time are successfully allocated with the measurement object IDs, the report configuration IDs and the measurement IDs.

Step 406: The base station issues a measurement configuration which is successfully allocated with a measurement object ID, a report configuration ID and a measurement ID at the same time by means of an RRC Connection Reconfiguration message (or other message mechanisms certainly).

### Embodiment 6

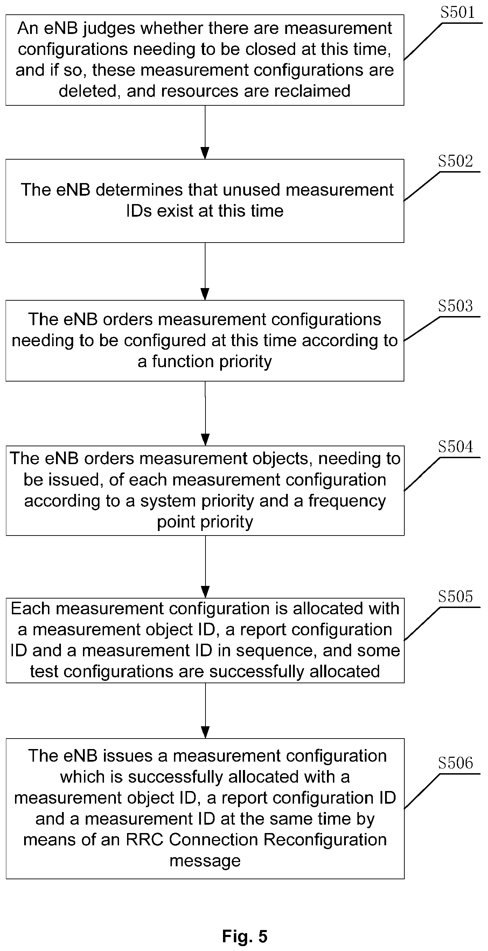

Fig. 5 shows a flow diagram of configuration success for some measurement configurations to be configured. The flow includes the steps as follows.

Step 501: A base station (eNB) judges whether there are measurement configurations needing to be closed at this time (currently), if so, these measurement configurations are added to a deletion list, and corresponding measurement object IDs, report configuration IDs and measurement IDs are reclaimed and are marked to be unused in order to be continuously used when measurement is opened subsequently.

Step 502: The base station judges whether unused measurement IDs exist at this time (currently), that is, the base station judges whether remaining resources exist currently, and if it is determined that the remaining resources exist, Step 503 is executed.

Step 503: The base station orders measurement configurations needing to be configured at this time according to a function priority.

Step 504: The base station orders measurement objects, needing to be issued, of each measurement configuration according to a system priority and a frequency point priority.

Step 505: On the basis of the first two ordering operations, the base station allocates each measurement configuration with the measurement object ID, the report configuration ID and the measurement ID in a sequence of priority from high to low; if a measurement object or a report configuration therein has been issued to a UE and is being used, a new ID will not be allocated, a previous ID which is dynamically allocated is continuously used, and a new measurement ID will be allocated; and it is assumed that some measurement configurations to be configured at this time are successfully allocated with the measurement object IDs, the report configuration IDs and the measurement IDs while remaining measurement configurations are not allocated, starting from the first unsuccessfully allocated measurement configuration, the following measurement configurations are not filled in a message body about measurement reconfiguration at this time, that is, the measurement configurations are not issued to the UE.

Step 506: The base station issues a measurement configuration which is successfully allocated with a measurement object ID, a report configuration ID and a measurement ID at the same time to the UE by means of an RRC Connection Reconfiguration message (or other message mechanisms certainly).

### Embodiment 7

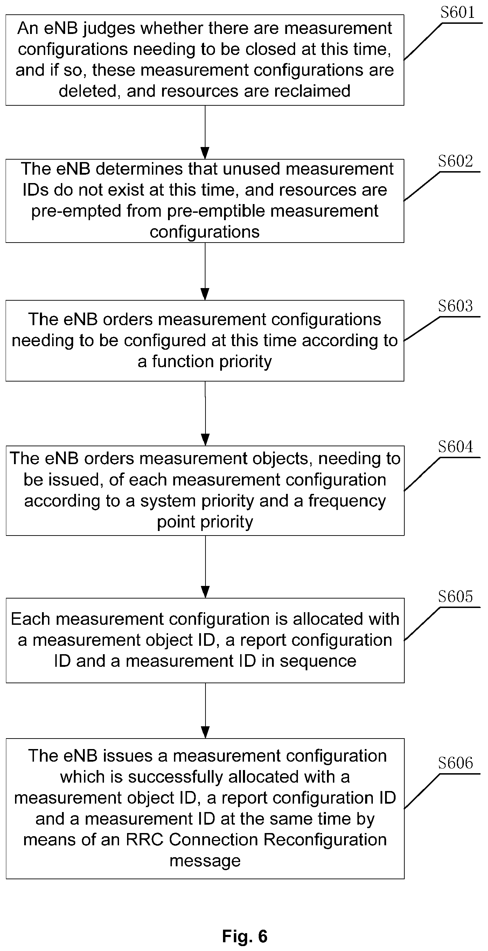

Fig. 6 shows a flow diagram of no remaining resources to be configured. The flow includes the steps as follows.

Step 601: A base station (eNB) judges whether there are measurement configurations needing to be closed at this time (currently), if so, these measurement configurations are added to a deletion list, and corresponding measurement object IDs, report configuration IDs and measurement IDs are reclaimed and are marked to be unused in order to be continuously used when measurement is opened subsequently.

Step 602: The base station judges whether unused measurement IDs exist at this time (currently), that is, the base station judges whether remaining resources exist currently; if it is determined that no remaining resources exist and it is determined that pre-emptible measurement configurations exist in measurement configurations issued to a UE and at least one measurement configuration of which a function priority, a system priority and a frequency point priority are lowest is pre-empted from the pre-emptible measurement configurations, the measurement configuration is deleted, and the measurement object ID, the report configuration ID and the measurement ID of the measurement configuration are reclaimed; and if in this step, it is determined that the pre-emptible measurement configurations do not exist, measurement reconfiguration is not performed on the UE.

Step 603: The base station orders measurement configurations needing to be configured at this time according to the function priority.

Step 604: The base station orders measurement objects, needing to be issued, of each measurement configuration according to the system priority and the frequency point priority.

Step 605: On the basis of the first two ordering operations, the base station allocates each measurement configuration with the measurement object ID, the report configuration ID and the measurement ID in a sequence of priority from high to low; if a measurement object or a report configuration therein has been issued to a UE and is being used, a new ID will not be allocated, a previous ID which is dynamically allocated is continuously used, and a new measurement ID will be allocated; and starting from the first unsuccessfully allocated measurement configuration among the measurement configurations which are not allocated with the measurement object IDs, the report configuration IDs and the measurement IDs, the following measurement configurations are not filled in a message body about measurement reconfiguration at this time, that is, the measurement configurations are not issued to the UE.

Step 606: The base station issues a measurement configuration which is successfully allocated with a measurement object ID, a report configuration ID and a measurement ID at the same time to the UE by means of an RRC Connection Reconfiguration message (or other message mechanisms certainly).

The above is the further detailed descriptions for the disclosure with reference to the detailed description of the embodiments. It cannot be determined that the embodiments of the disclosure are limited to these descriptions.

### Industrial Applicability

As above, the measurement configuration method and apparatus and the base station provided by the embodiments of the disclosure have the beneficial effects as follows. In the process of configuring the measurement configurations, the resources are dynamically allocated and reclaimed, so that limited resources can be better recycled and can be more flexibly allocated. Meanwhile, the resources are dynamically pre-empted as required, so that limited resources can be used by measurement functions which are most needed by the base station, thereby better meeting measurement requirements of various functions.

## Claims

1. A measurement configuration method executed by a base station, in a process of configuring measurement configurations to be configured to a UE, wherein each measurement configuration is associated with ID resources, which comprise one measurement object ID, one report configuration ID and one measurement ID, the method comprising:
judging (S301, S401, S501, S601) whether one or more measurement configuration needing to be closed exist in the measurement configurations issued to the UE; when it is judged that measurement configurations needing to be closed exist in the issued measurement configurations, for at least one measurement configuration deleting the measurement configurations needing to be closed and reclaiming the ID resources associated with the deleted measurement configurations;
judging (S302, S402, S502, S602) whether no resources have remained currently for configuring measurement configurations; if no such resources have remained, judging whether one or more pre-emptible measurement configuration exist in the issued measurement configurations, wherein the pre-emptible measurement configurations comprise
measurement configurations, of which a function priority is lower than that of the measurement configurations to be configured currently, in the issued measurement
when it is determined that one or more pre-emptible measurement configuration exist in the issued measurement configurations, selecting at least one measurement configuration of which the function priority, a system priority and a frequency point priority are lowest from the pre-emptible measurement configurations, deleting the at least one measurement configuration from the pre-emptible measurement configurations and reclaiming the ID resources associated with said at least one measurement configuration;
ordering (S303, S403, S503, S603) the measurement configurations to be configured currently according to a function priority, and further ordering (S304, S404, S504, S604) measurement objects corresponding to each measurement configuration to be configured according to a system priority and a frequency point priority;
allocating (S305, S405, S505, S605) on the basis of the two ordering operations each measurement configuration to be configured with an associated measurement object ID, an associated report configuration ID and an associated measurement ID in sequence, wherein for each measurement configuration:
if a measurement object corresponding to each measurement configuration has been issued to the UE and is being used, the measurement object ID associated with measurement object is continuously used;
if a report configuration corresponding to each measurement configuration has been issued to the UE and is being used, the report configuration ID associated with said report configuration is continuously used;
a new measurement ID is allocated;
issuing (S306, S406, S506, S606) each measurement configuration which is successfully allocated with the associated ID resources at the same time via a RRC Connection Reconfiguration message.

2. The measurement configuration method as claimed in claim 1, wherein judging whether no resources have remained currently for configuring the measurement configurations to be configured currently comprises:
judging, by the base station, whether the number of issued measurement Identifiers, ID, has reached a maximum value;
wherein the measurement ID comprises at least one of the following IDs: a measurement object ID, a report configuration ID and a measurement ID.

3. The measurement configuration method as claimed in claim 1, wherein reclaiming the resources of at least one measurement configuration from the pre-emptible measurement configurations comprises:
selecting, by the base station, at least one measurement configuration of which the function priority, a system priority and a frequency point priority are lowest from the pre-emptible measurement configurations, deleting the at least one measurement configuration, and reclaiming following IDs of the at least one measurement configuration: a measurement object ID, a report configuration ID and a measurement ID.

4. A measurement configuration apparatus, which is applied in a base station, in a process of configuring measurement configurations to be configured to a UE, wherein each measurement configuration is associated with ID resources, which comprise one measurement object ID, one report configuration ID and one measurement ID, and the apparatus comprises means for performing the following steps:
comprises a resource pre-emption module, configured to reclaim, when it is determined that one or more pre-emptible measurement configuration exist in issued measurement configurations in a process of configuring measurement configurations to be configured, resources of at least one measurement configuration from the pre-emptible measurement configurations so that measurement configurations to be configured currently are configured by using the reclaimed resources;
wherein the pre-emptible measurement configurations comprise: measurement configurations, of which a function priority is lower than that of the measurement configurations to be configured currently in the issued measurement configurations; or, measurement configurations, which have pre-emptive identifiers and of which the function priority is lower than that of the measurement configurations to be configured currently in the issued measurement configurations;
wherein the measurement configuration apparatus is further configured to perform the following steps:
judging (S301, S401, S501, S601) whether one or more measurement configuration needing to be closed exist in the measurement configurations issued to the UE; when it is judged that measurement configurations needing to be closed exist in the issued measurement configurations, for at least one measurement configuration deleting the measurement configurations needing to be closed and reclaiming the ID resources associated with the deleted measurement configurations;
judging (S302, S402, S502, S602) whether no resources have remained currently for configuring measurement configurations; if no such resources have remained, judging whether one or more pre-emptible measurement configuration exist in the issued measurement configurations, wherein the pre-emptible measurement configurations comprise
measurement configurations, of which a function priority is lower than that of the measurement configurations to be configured currently, in the issued measurement configurations;
when it is determined that one or more pre-emptible measurement configuration exist in the issued measurement configurations, selecting at least one measurement configuration of which the function priority, a system priority and a frequency point priority are lowest from the pre-emptible measurement configurations, deleting the at least one measurement configuration from the pre-emptible measurement configurations and reclaiming the ID resources associated with said at least one measurement configuration;
ordering (S303, S403, S503, S603) the measurement configurations to be configured currently according to a function priority, and further ordering (S304, S404, S504, S604) measurement objects corresponding to each measurement configuration to be configured according to a system priority and a frequency point priority;
allocating (S305, S405, S505, S605) on the basis of the two ordering operations each measurement configuration to be configured with an associated measurement object ID, an associated report configuration ID and an associated measurement ID in sequence, wherein for each measurement configuration:
if a measurement object corresponding to each measurement configuration has been issued to the UE and is being used, the measurement object ID associated with measurement object is continuously used;
if a report configuration corresponding to each measurement configuration has been issued to the UE and is being used, the report configuration ID associated with said report configuration is continuously used;
a new measurement ID is allocated;
issuing (S306, S406, S506, S606) each measurement configuration which is successfully allocated with the associated ID resources at the same time via a RRC Connection Reconfiguration message.

## Patentansprüche

1. Messkonfigurationsverfahren, das durch eine Basisstation in einem Prozess zum Konfigurieren von für ein Benutzerendgerät zu konfigurierenden Messkonfigurationen ausgeführt wird, wobei jeder Messkonfiguration Kennressourcen zugeordnet sind, die eine Messobjektkennung, eine Berichtskonfigurationskennung und eine Messkennung umfassen; wobei das Verfahren umfasst:
Beurteilen (S301, S401, S501, S601), ob eine oder mehrere Messkonfigurationen, die geschlossen werden müssen, in den an das Benutzerendgerät ausgegebenen Messkonfigurationen vorhanden sind; wenn das Urteil darin besteht, dass Messkonfigurationen, die geschlossen werden müssen, in den ausgegebenen Messkonfigurationen vorhanden sind, Löschen der Messkonfigurationen, die geschlossen werden müssen, für mindestens eine Messkonfiguration und Zurückfordern der mit den gelöschten Messkonfigurationen verbundenen Kennressourcen;
Beurteilen (S302, S402, S502, S602), ob gegenwärtig keine Ressourcen zum Konfigurieren von Messkonfigurationen übrig geblieben sind; wenn keine derartigen Ressourcen übrig geblieben sind, Beurteilen, ob eine oder mehrere vorwegnehmbare Messkonfigurationen in den ausgegebenen Messkonfigurationen vorhanden sind, wobei die vorwegnehmbaren Messkonfigurationen Messkonfigurationen, bei denen eine Funktionspriorität niedriger ist als jene der gegenwärtig zu konfigurierenden Messkonfigurationen, in der ausgegebenen Messung umfassen, wenn bestimmt wird, dass eine oder mehrere vorwegnehmbare Messkonfigurationen in den ausgegebenen Messkonfigurationen vorhanden sind, Auswählen mindestens einer Messkonfiguration, bei der die Funktionspriorität, eine Systempriorität und eine Frequenzpunktpriorität am niedrigsten sind, aus den vorwegnehmbaren Messkonfigurationen, Löschen der mindestens einen Messkonfiguration aus den vorwegnehmbaren Messkonfigurationen und Zurückfordern der Kennressourcen, die der genannten mindestens einen Messkonfiguration zugeordnet sind;
Ordnen (S303, S403, S503, S603) der gegenwärtig zu konfigurierenden Messkonfigurationen gemäß einer Funktionspriorität und ferner Ordnen (S304, S404, S504, S604) von Messobjekten, die jeweils zu konfigurierenden Messkonfigurationen entsprechen, gemäß einer Systempriorität und einer Frequenzpunktpriorität;
der Reihe nach Zuweisen (S305, S405, S505, S605) einer zugeordneten Messobjektkennung, einer zugeordneten Berichtskonfigurationskennung und einer zugeordneten Messkennung zu jeder zu konfigurierenden Messkonfiguration auf der Grundlage der beiden Ordnungsvorgänge, wobei für jede Messkonfiguration:
wenn ein Messobjekt, das der jeweiligen Messkonfiguration entspricht, an das Benutzerendgerät ausgegeben wurde und verwendet wird, wird die dem Messobjekt zugeordnete Messobjektkennung kontinuierlich verwendet;
wenn eine Berichtskonfiguration, die der jeweiligen Messkonfiguration entspricht, an das Benutzerendgerät ausgegeben wurde und verwendet wird, wird die der genannten Berichtskonfiguration zugeordnete Berichtskonfigurationskennung kontinuierlich verwendet;
eine neue Messkennung wird zugewiesen;
Ausgeben (S306, S406, S506, S606) der jeweiligen Messkonfiguration, die gleichzeitig über eine RRC-Verbindungsrekonfigurationsnachricht erfolgreich den zugeordneten Kennressourcen zugewiesen wurde.

2. Messkonfigurationsverfahren nach Anspruch 1, wobei das Beurteilen, ob gegenwärtig keine Ressourcen zum Konfigurieren der gegenwärtig zu konfigurierenden Messkonfigurationen übrig geblieben sind, umfasst:
Beurteilen, ob die Anzahl der ausgegebenen Messkennungen einen Maximalwert erreicht hat, durch die Basisstation;
wobei die Messkennung mindestens eine der folgenden Kennungen umfasst: eine Messobjektkennung, eine Berichtskonfigurationskennung und eine Messkennung.

3. Messkonfigurationsverfahren nach Anspruch 1, wobei das Zurückfordern der Ressourcen mindestens einer Messkonfiguration aus den vorwegnehmbaren Messkonfigurationen umfasst:
Auswählen mindestens einer Messkonfiguration, bei der die Funktionspriorität, eine Systempriorität und eine Frequenzpunktpriorität am niedrigsten sind, aus den vorwegnehmbaren Messkonfigurationen durch die Basisstation, Löschen der mindestens einen Messkonfiguration und Zurückfordern der folgenden Kennungen der mindestens einen Messkonfiguration: einer Messobjektkennung, einer Berichtskonfigurationskennung und einer Messkennung.

4. Messkonfigurationsvorrichtung, die in einer Basisstation in einem Prozess zum Konfigurieren von für ein Benutzerendgerät zu konfigurierenden Messkonfigurationen angewendet wird, wobei jeder Messkonfiguration Kennressourcen zugeordnet sind, die eine Messobjektkennung, eine Berichtskonfigurationskennung und eine Messkennung umfassen, und die Vorrichtung Mittel zum Durchführen der folgenden Schritte umfasst:
umfasst ein Ressourcenvorwegnahmemodul, das, wenn bestimmt wird, dass eine oder mehrere vorwegnehmbare Messkonfigurationen in ausgegebenen Messkonfigurationen in einem Prozess zum Konfigurieren zu konfigurierender Messkonfigurationen vorhanden sind, zum Zurückfordern von Ressourcen mindestens einer Messkonfiguration von den vorwegnehmbaren Messkonfigurationen konfiguriert ist, sodass die gegenwärtig zu konfigurierenden Messkonfigurationen unter Verwendung der zurückgeforderten Ressourcen konfiguriert werden;
wobei die vorwegnehmbaren Messkonfigurationen umfassen: Messkonfigurationen, bei denen eine Funktionspriorität niedriger ist als jene der in den ausgegebenen Messkonfigurationen gegenwärtig zu konfigurierenden Messkonfigurationen; oder Messkonfigurationen, die vorwegnehmbare Kennungen aufweisen und bei denen die Funktionspriorität niedriger ist als jene der in den ausgegebenen Messkonfigurationen gegenwärtig zu konfigurierenden Messkonfigurationen;
wobei die Messkonfigurationsvorrichtung ferner dazu konfiguriert ist, die folgenden Schritte durchzuführen:
Beurteilen (S301, S401, S501, S601), ob eine oder mehrere Messkonfigurationen, die geschlossen werden müssen, in den an das Benutzerendgerät ausgegebenen Messkonfigurationen vorhanden sind; wenn das Urteil darin besteht, dass Messkonfigurationen, die geschlossen werden müssen, in den ausgegebenen Messkonfigurationen vorhanden sind, Löschen der Messkonfigurationen, die geschlossen werden müssen, für mindestens eine Messkonfiguration und Zurückfordern der mit den gelöschten Messkonfigurationen verbundenen Kennressourcen;
Beurteilen (S302, S402, S502, S602), ob gegenwärtig keine Ressourcen zum Konfigurieren von Messkonfigurationen übrig geblieben sind; wenn keine derartigen Ressourcen übrig geblieben sind, Beurteilen, ob eine oder mehrere vorwegnehmbare Messkonfigurationen in den ausgegebenen Messkonfigurationen vorhanden sind, wobei die vorwegnehmbaren Messkonfigurationen Messkonfigurationen umfassen, bei denen eine Funktionspriorität niedriger ist als jene der gegenwärtig zu konfigurierenden Messkonfigurationen in den ausgegebenen Messkonfigurationen;
wenn bestimmt wird, dass eine oder mehrere vorwegnehmbare Messkonfigurationen in den ausgegebenen Messkonfigurationen vorhanden sind, Auswählen mindestens einer Messkonfiguration, bei der die Funktionspriorität, eine Systempriorität und eine Frequenzpunktpriorität am niedrigsten sind, aus den vorwegnehmbaren Messkonfigurationen, Löschen des Löschens mindestens einer Messkonfiguration aus den vorwegnehmbaren Messkonfigurationen und Zurückfordern der Kennressourcen, die der genannten mindestens einen Messkonfiguration zugeordnet sind;
Ordnen (S303, S403, S503, S603) der gegenwärtig zu konfigurierenden Messkonfigurationen gemäß einer Funktionspriorität und ferner Ordnen (S304, S404, S504, S604) von Messobjekten, die jeweils zu konfigurierenden Messkonfigurationen entsprechen, gemäß einer Systempriorität und einer Frequenzpunktpriorität;
der Reihe nach Zuweisen (S305, S405, S505, S605) einer zugeordneten Messobjektkennung, einer zugeordneten Berichtskonfigurationskennung und einer zugeordneten Messkennung zu jeder zu konfigurierenden Messkonfiguration auf der Grundlage der beiden Ordnungsvorgänge, wobei für jede Messkonfiguration:
wenn ein Messobjekt, das der jeweiligen Messkonfiguration entspricht, an das Benutzerendgerät ausgegeben wurde und verwendet wird, wird die dem Messobjekt zugeordnete Messobjektkennung kontinuierlich verwendet;
wenn eine Berichtskonfiguration, die der jeweiligen Messkonfiguration entspricht, an das Benutzerendgerät ausgegeben wurde und verwendet wird, wird die der genannten Berichtskonfiguration zugeordnete Berichtskonfigurationskennung kontinuierlich verwendet;
eine neue Messkennung wird zugewiesen;
Ausgeben (S306, S406, S506, S606) der jeweiligen Messkonfiguration, die gleichzeitig über eine RRC-Verbindungsrekonfigurationsnachricht erfolgreich den zugeordneten Kennressourcen zugewiesen wurde.

## Revendications

1. Procédé de configuration de mesures exécuté par une station de base, dans un processus de configuration de configurations de mesures à configurer sur un UE, dans lequel chaque configuration de mesures est associée à des ressources d'ID, qui comprennent un ID d'objet de mesure, un ID de configuration de rapport et un ID de mesure, le procédé comprenant :
l'évaluation (S301, S401, S501, S601) pour savoir si une ou plusieurs configurations de mesures devant être fermées existent dans les configurations de mesures délivrées à l'UE ; lorsqu'il est évalué que des configurations de mesures devant être fermées existent dans les configurations de mesures délivrées, pour au moins une configuration de mesure, la suppression des configurations de mesures devant être fermées et la récupération des ressources d'ID associées aux configurations de mesures supprimées ;
l'évaluation (S302, S402, S502, S602) pour savoir si aucune ressource n'est restée actuellement pour configurer des configurations de mesures ; si aucune telle ressource n'est restée, l'évaluation pour savoir s'il existe une ou plusieurs configurations de mesures préemptives dans les configurations de mesures émises, les configurations de mesures préemptives comprenant des configurations de mesures, dont une priorité de fonction est inférieure à celle des configurations de mesures à configurer actuellement, dans la mesure émise lorsqu'il est déterminé qu'une ou plusieurs configurations de mesures préemptives existent dans les configurations de mesures émises, la sélection d'au moins une configuration de mesures dont la priorité de fonction, une priorité de système et une priorité de point de fréquence sont les plus faibles parmi les configurations de mesures préemptives, la suppression de l'au moins une configuration de mesures des configurations de mesures préemptives et la récupération des ressources d'ID associées à ladite au moins une configuration de mesures ;
le classement (S303, S403, S503, S603) des configurations de mesures à configurer actuellement en fonction d'une priorité de fonction et le classement supplémentaire (S304, S404, S504, S604) d'objets de mesure correspondant à chaque configuration de mesures à configurer en fonction d'une priorité du système et d'une priorité de point de fréquence ;
l'attribution (S305, S405, S505, S605) sur la base des deux opérations de classement, de chaque configuration de mesures à configurer avec un ID d'objet de mesure associé, d'un ID de configuration de rapport associé et d'un ID de mesure associé en séquence, dans lequel pour chaque configuration de mesures :
si un objet de mesure correspondant à chaque configuration de mesures a été délivré à l'UE et est utilisé, l'ID d'objet de mesure associé à l'objet de mesure est utilisé en continu ;
si une configuration de rapport correspondant à chaque configuration de mesures a été délivrée à l'UE et est utilisée, l'ID de configuration de rapport associé à ladite configuration de rapport est utilisé en continu ;
un nouvel ID de mesure est attribué ;
la délivrance (S306, S406, S506, S606) de chaque configuration de mesures qui se voit attribuer avec succès des ressources d'ID associées en même temps par l'intermédiaire d'un message de reconfiguration de connexion RRC.

2. Procédé de configuration de mesures selon la revendication 1, dans lequel l'évaluation du fait qu'il ne reste actuellement aucune ressource pour configurer les configurations de mesures à configurer comprend actuellement :
l'évaluation, par la station de base, pour savoir si le nombre d'identificateurs, ID, de mesure délivrés a atteint une valeur maximale ;
dans lequel l'ID de mesure comprend au moins l'un des ID suivants : un ID d'objet de mesure, un ID de configuration de rapport et un ID de mesure.

3. Procédé de configuration de mesures selon la revendication 1, dans lequel la récupération des ressources d'au moins une configuration de mesures parmi les configurations de mesures préemptives comprend :
la sélection, par la station de base, d'au moins une configuration de mesures dont la priorité de fonction, une priorité de système et une priorité de point de fréquence sont les plus faibles parmi les configurations de mesures préemptives, la suppression de l'au moins une configuration de mesures et la récupération des ID suivants de l'au moins une configuration de mesures : un ID d'objet de mesure, un ID de configuration de rapport et un ID de mesure.

4. Appareil de configuration de mesures, qui est appliqué dans une station de base, dans un processus de configuration de configurations de mesures à configurer sur un UE, dans lequel chaque configuration de mesures est associée à des ressources d'ID, qui comprennent un ID d'objet de mesure, un ID de configuration de rapport et un ID de mesure et l'appareil comprend des moyens pour effectuer les étapes suivantes :
comprend un module de préemption de ressources, configuré pour récupérer, lorsqu'il est déterminé qu'une ou plusieurs configurations de mesures préemptives existent dans des configurations de mesure délivrées dans un processus de configuration de configurations de mesures à configurer, des ressources d'au moins une configuration de mesures parmi les configurations de mesures préemptives, de sorte que les configurations de mesures à configurer actuellement soient configurées en utilisant les ressources récupérées ;
dans lequel les configurations de mesures préemptives comprennent : des configurations de mesures, dont une priorité de fonction est inférieure à celle des configurations de mesures à configurer actuellement dans les configurations de mesures délivrées ; ou, des configurations de mesure, qui ont des identifiants préemptifs et dont la priorité de fonction est inférieure à celle des configurations de mesures à configurer actuellement dans les configurations de mesures délivrées ;
dans lequel l'appareil de configuration de mesures est en outre configuré pour effectuer les étapes suivantes :
l'évaluation (S301, S401, S501, S601) pour savoir si une ou plusieurs configurations de mesures devant être fermées existent dans les configurations de mesures délivrées à l'UE ; lorsqu'il est évalué que des configurations de mesures devant être fermées existent dans les configurations de mesures délivrées, pour au moins une configuration de mesure, la suppression des configurations de mesures devant être fermées et la récupération des ressources d'ID associées aux configurations de mesures supprimées ;
l'évaluation (S302, S402, S502, S602) pour savoir si aucune ressource n'est restée actuellement pour configurer les configurations de mesures ; si aucune telle ressource n'est restée, l'évaluation pour savoir s'il existe une ou plusieurs configurations de mesures préemptives dans les configurations de mesures délivrées, les configurations de mesures préemptives comprenant des configurations de mesures, dont une priorité de fonction est inférieure à celle des configurations de mesures à configurer actuellement, dans les configurations de mesures délivrées ;
lorsqu'il est déterminé qu'une ou plusieurs configurations de mesures préemptives existent dans les configurations de mesures délivrées, la sélection d'au moins une configuration de mesures dont la priorité de fonction, une priorité de système et une priorité de point de fréquence sont les plus faibles parmi les configurations de mesures préemptives, la suppression d'au moins une configuration de mesures des configurations de mesures préemptives et la récupération des ressources d'ID associées à ladite au moins une configuration de mesures ;
le classement (S303, S403, S503, S603) des configurations de mesures à configurer actuellement en fonction d'une priorité de fonction et le classement supplémentaire (S304, S404, S504, S604) d'objets de mesure correspondant à chaque configuration de mesures à configurer en fonction d'une priorité du système et d'une priorité de point de fréquence ;
l'attribution (S305, S405, S505, S605) sur la base des deux opérations de classement, de chaque configuration de mesures à configurer avec un ID d'objet de mesure associé, d'un ID de configuration de rapport associé et d'un ID de mesure associé en séquence, dans lequel pour chaque configuration de mesures :
si un objet de mesure correspondant à chaque configuration de mesures a été délivré à l'UE et est utilisé, l'ID d'objet de mesure associé à l'objet de mesure est utilisé en continu ;
si une configuration de rapport correspondant à chaque configuration de mesures a été délivrée à l'UE et est utilisée, l'ID de configuration de rapport associé à ladite configuration de rapport est utilisé en continu ;
un nouvel ID de mesure est attribué ;
la délivrance (S306, S406, S506, S606) de chaque configuration de mesures qui se voit attribuer avec succès des ressources d'ID associées en même temps par l'intermédiaire d'un message de reconfiguration de connexion RRC.
